# EUROPÄISCHE PATENTANMELDUNG

(11) **EP 1 906 604 A1**
(43) Veröffentlichungstag der Anmeldung: **02.04.2008**
(21) Anmeldenummer: 07075697.8
(22) Anmeldetag: 16.08.2007
(51) Int. Cl.: H04L 12/56

(54) **Verfahren und Vorrichtung zur Übertragung von Daten**

(30) Priorität: 29.09.2006 DE 102006047349
(71) Anmelder: Vodafone Holding GmbH, 40213 Düsseldorf (DE)
(72) Erfinder: Kremling, Hartmut, 41445 Radebeul (DE); Gaelings, Engelbert, 47802 Krefeld (DE); Steinkönig, Peter, 40724 Hilden (DE)
(74) Vertreter: Meissner, Peter E.

(57) **Zusammenfassung**

Die Erfindung betrifft ein Verfahren sowie ein Endgerät und eine Vorrichtung zur Auswahl einer Übertragungstechnik zum übertragen von Daten. Das Verfahren erlaubt die gezielte Auswahl anhand von Datenparametern und Übertragungsparametern. Dabei wird entsprechend von Vorgaben das jeweils günstigste Verfahren ausgewählt.

## Beschreibung

### Technisches Gebiet

Die Erfindung betrifft ein Verfahren zur Übertragung von Daten einer Datenapplikation von einem Endgerät zu einem Telekommunikationsnetz, insbesondere einem zellularen Telekommunikationsnetz sowie ein Endgerät und/oder eine Vorrichtung.

### Stand der Technik

Die Übermittlung von Daten nimmt in Umfang und Bedeutung für den Endkunden stetig zu. Zudem wird durch den Aufbau von Telekommunikationsnetzen der so genannten dritten Generation zunehmend Übertragungskapazität für die Übermittlung von Daten geschaffen. Durch die parallele Verfügbarkeit von Netzen der zweiten und dritten Generation, beispielsweise in Ballungsräumen und entlang Hauptverkehrsstrecken, gibt es häufig Alternativen bei der Wahl der Übertragungstechnik.

Eine gängige Lösung ist die Wahl der Übertragungstechnik, aus der Menge der zur Verfügung stehenden Übertragungstechniken, die die höchste Bandbreite zur Verfügung stellt.

Das Dokument "GSM and CDMA - a common network approach" veröffentlicht in Ericsson Review, Ausgabe 2 von 2004, beschreibt eine Strategie, bei der Teilnehmerendgeräte bevorzugt von einem Netz aus einer Auswahl von mindestens zwei Netzen, versorgt werden. Bei dem Start einer Applikation wird dann anhand von Verfügbarkeit, Verkehrsauslastung, oder angeforderter Leistungsqualität wie insbesondere Bandbreite, eines der verfügbaren Netze ausgewählt. Allerdings beschreibt das Dokument lediglich die Notwendigkeit einer Netzauswahl und nicht deren Umsetzung.

Es ist daher Aufgabe der Erfindung ein Verfahren sowie Vorrichtungen zur Implementierung eines Verfahrens zur verbesserten Auswahl einer Übertragungstechnik zum Übermitteln von Daten in einem Kommunikationsnetz zur Verfügung zu stellen.

### Zusammenfassung der Erfindung

Dies wird erfindungsgemäß gelöst durch das Verfahren nach Anspruch 1, das Endgerät nach Anspruch 11 und die Vorrichtung nach Anspruch 16.

Die Erfindung stellt ein Verfahren zur Übertragung von Daten zwischen einem Endgerät und einem zellularen Telekommunikationsnetz zur Verfügung. Ein Schritt des Verfahrens ist die Bestimmung von Übertragungstechniken, die sowohl vom Telekommunikationsnetz als auch vom Endgerät unterstützt werden. Das bedeutet, die Bestimmung von Übertragungstechniken, die, zum Zeitpunkt der Bestimmung, vom Endgerät zur Übertragung von Daten über das zellulare Telekommunikationsnetz genutzt werden könnten. In weiteren Schritten wird eine Verbindungsanforderung von einer Datenapplikation empfangen, Parameter der zu übertragenden Daten werden bestimmt, sowie Parameter der Übertragungstechniken. Die Parameter werden gewichtet verglichen, und mindestens eine Übertragungstechnik wird anhand des Ergebnisses des gewichteten Vergleichs ausgewählt. Anschließend wird ein Verbindungsaufbau mit der ausgewählten Übertragungstechnik initiiert.

In einer Ausführungsform des erfindungsgemäßen Verfahrens umfassen die Parameter der zu übertragenden Daten, im folgenden auch Datenparameter genannt, mindestens eines der folgenden: Datenmenge, Größe von Datenblöcken, Wartezeit bevor ein Datenpaket als verloren gilt und erneut gesendet wird, Taktung des Anfallens einzelner Datenpakete und Dienstgüteanforderungen wie Umlaufzeit.

In einer Ausführungsform des erfindungsgemäßen Verfahrens umfassen die Parameter der Übertragungstechnik, im folgenden auch als Übertragungsparameter bezeichnet, mindestens eines der folgenden: Bandbreite, Umlaufzeit, Dauer eines Verbindungsaufbaus, kumulierte Datenmenge die innerhalb einer vordefinierten Zeit übertragen werden kann und Größe sowie Taktung von Datenblöcken.

Es kann bevorzugt die Übertragungstechnik ausgewählt werden, die am schnellsten die zu übertragenden Daten übermittelt.

Es kann auch bevorzugt die Übertragungstechnik ausgewählt werden, die die beste Ausnutzung von Übertragungsressourcen auf einer Luftschnittstelle bietet.

Ebenfalls oder außerdem kann die aktuelle Auslastung der zur Verfügung stehenden Übertragungstechniken bei der Auswahl berücksichtigt werden.

Die aktuelle Auslastung des Telekommunikationsnetzes kann ebenfalls bei der Auswahl berücksichtigt werden.

In einer Ausführungsform der Erfindung wird einer Applikation ein Anforderungsprofil zugeordnet. Das Bestimmen der Parameter der zu übertragenden Daten erfolgt dann durch eine Identifikation des Anforderungsprofils.

Auch kann einer Übertragungstechnik ein Übertragungsprofil zugeordnet werden und das Bestimmen der Parameter der Übertragungstechnik erfolgt durch eine Identifikation des Übertragungsprofils.

Die Auswahl einer Übertragungstechnik kann beispielsweise anhand vordefinierter Auswahlprogramme erfolgen.

Die Erfindung betrifft außerdem ein Endgerät für ein zellulares Telekommunikationsnetz mit einer Übertragungseinheit, die so ausgestaltet ist, dass sie geeignet ist, Daten von einer Datenapplikation über mindestens zwei verschiedene Übertragungstechniken zu übermitteln. Das Endgerät umfasst zusätzlich eine Bestimmungseinheit zum Bestimmen von Parametern zu übertragender Daten, eine Ermittlungseinheit zum Bestimmen von Parametern der Übertragungstechniken, und eine Auswahleinheit zur Auswahl mindestens einer Übertragungstechnik.

Das Endgerät kann eine Vergleichseinheit zum gewichteten Vergleichen der Parameter enthalten und die Auswahleinheit kann so ausgestaltet sein, dass sie die Auswahl anhand des Ergebnisses des gewichteten Vergleichs ausführt.

Das Endgerät kann eine Sendeeinheit zum Senden einer Anfrage zur Auswahl einer Übertragungstechnik an das Telekommunikationsnetz aufweisen.

In einer Ausführungsform der Erfindung wählt die Auswahleinheit die Übertragungstechnik unter Berücksichtigung einer von dem Telekommunikationsnetz empfangenen Nachricht aus.

Die Nachricht enthält beispielsweise Informationen über wenigstens eines der folgenden: die aktuelle Auslastung des Telekommunikationsnetzes, die aktuelle Auslastung von mindestens einer Übertragungstechnik, und eine von einer Vorrichtung getroffene Auswahl einer Übertragungstechnik.

Die Erfindung betrifft ebenfalls eine Vorrichtung zur Auswahl einer Übertragungstechnik für die Übermittlung von Daten zwischen einem Endgerät und einem Telekommunikationsnetz wobei das Telekommunikationsnetz mindestens zwei verschiedene Übertragungstechniken zur Übermittlung von Daten unterstützt. Die Vorrichtung umfasst eine Einheit zur Bestimmung von Übertragungstechniken, die sowohl von einem Endgerät als auch vom Telekommunikationsnetz unterstützt werden, eine Einheit zur Bestimmung von Parametern zu übertragender Daten einer Datenapplikation, eine Einheit zur Bestimmung von Parametern einer Übertragungstechnik, eine Einheit zum gewichteten Vergleichen von Parametern, eine Einheit zum Auswählen einer Übertragungstechnik anhand des Ergebnisses des Vergleiches und eine Einheit zum Empfangen einer Anfrage eines Endgerätes sowie zum Senden einer Nachricht mit einer Identifikation der ausgewählten Übertragungstechnik.

Die Vorrichtung kann zusätzlich eine Einheit zur Ermittlung der aktuellen Auslastung des Telekommunikationsnetzes aufweisen.

Die Vorrichtung kann zusätzlich oder alternativ eine Einheit zur Ermittlung der aktuellen Auslastung einer Übertragungstechnik umfassen.

Die Vorrichtung kann eine Auswahleinheit enthalten, die so ausgestaltet ist, dass sie der Auswahl eine aktuelle Auslastung des Telekommunikationsnetzes oder eine aktuelle Auslastung einer Übertragungstechnik oder beides berücksichtigen kann.

### Kurzbeschreibung der Figuren

Figur 1 zeigt ein Flussdiagramm des erfindungsgemäßen Verfahrens.
Figur 2 zeigt ein erfindungsgemäßes Endgerät und
Figur 3 zeigt eine erfindungsgemäße Vorrichtung,

### Detaillierte Beschreibung der Erfindung

Die Erfindung betrifft ein Verfahren zur Übertragung von Daten einer Datenapplikation von einem Endgerät zu einem Telekommunikationsnetz, insbesondere einem zellularen Telekommunikationsnetz sowie ein Endgerät und/oder eine Vorrichtung. Zu diesem Zweck wird aus einer Mehrzahl von Übertragungstechniken diejenige ausgewählt, die am besten den Vorgaben entspricht.

Eine Übertragungstechnik im Sinne der Erfindung ist ein Verfahren zum Übermitteln von Daten, paket- oder leitungsvermittelt, entsprechend Telekommunikationsstandards. Zum Beispiel kann eine Übertragung unter Verwendung von Verfahren die entsprechend EDGE (Enhanced Data rates for GSM Evolution) Spezifikationen, GPRS (General Packet Radio Service) Spezifikationen, HSCSD (High Speed Circuit Switched Data) Spezifikationen, jeweils mit einem oder mehreren Zeitschlitzen (slots), UMTS (Universal Mobile Telecommunication System) Spezifikationen insbesondere auch HSDPA (High Speed Downlink Packet Access), HSUPA (High Speed Uplink Packet Access), oder Rel99-DCH (Release 99 Dedicated transprt CHannel) operieren erfolgen.

Vorgaben können unter anderem entweder von einem Netzbetreiber oder einem Nutzer oder beiden vorgegeben werden. Beispiele vor Vorgaben sind eine besonders gute Ausnutzung der Resourcen einer Luftschnittstelle, eine möglichst schnelle Übermittlung von Daten, eine möglichst gleichmäßige Übermittlung von Daten, eine möglichst geringe Beeinträchtigung anderer Verbindungen oder eine gleichmäßige Auslastung verschiedener Übertragungstechniken oder Übertragungsdienste.

Faktoren, die die Geschwindigkeit einer Datenübertragung beeinflussen können sind beispielsweise Bandbreite, Dauer des Verbindungsaufbaus, Anzahl und Größe der zu Übertragenden Pakete sowie Paketgröße der Übertragungstechnik, Taktung der für die Übertragung genutzten Nachrichten, sowie die erlaubte Umlaufzeit.

Eine hohe Datenrate oder Bandbreite erlaubt die Übermittlung einer großen Datenmenge in einer vorgegebenen Zeit. Viele Übertragungstechniken haben variable Datenraten, die zeitlich aufsteigend zur Verfügung gestellt werden. So bietet UMTS, abhängig von der Implementierung, beispielsweise alle 5 Sekunden eine Verdoppelung der Bandbreite beginnend mit 64 k bps bis hin zu 384 k bps an.

Ein weiterer Parameter, der einen Einfluss auf die Geschwindigkeit hat, ist die Dauer eines Verbindungsaufbaus. Verschiedene Übertragungstechniken benötigen unterschiedliche Aufbauzeiten für eine Verbindung. So braucht eine UMTS Verbindung im Schnitt derzeit ca. 2,7 Sekunden für einen Verbindungsaufbau, während eine EDGE oder GPRS Verbindung in ca. 300 Millisekunden aufgebaut ist. Je nach Menge der zu übertragenden Daten kann somit eine EDGE Verbindung günstiger sein als eine, schließlich in der Bandbreite höhere, UMTS Verbindung.

Ein weiterer Parameter ist die Übereinstimmung zwischen der Paketgröße der Datenpakete einer Anwendung, die übertragen werden sollen und der Größe des Nutzdatenanteils der Datenpakete der Übertragungstechnik. Wenn der Nutzdatenanteil der Datenpakete einer Übertragungstechnik gleich groß oder geringfügig größer ist als die Paketgröße der Datenpakete die übertragen werden sollen, ist dies günstiger als zu kleine oder sehr viel größere Datenpakete. Bei guter Übereinstimmung kann ein Eins-zu-Eins Verhältnis genutzt werden; das bedeutet, ein Datenpaket der Anwendung wird in ein Datenpaket der Übertragungstechnik gepackt und übertragen. Ist das Nutzdatenpaket zu groß für das Übertragungsdatenpaket, muss es auf mehrere Übertragungsdatenpakete verteilt werden. Dies macht eine zumindest teilweise Zwischenspeicherung der Nutzdaten auf der Senderseite erforderlich. Auch auf der Empfängerseite müssen die Nutzdaten bis zum vollständigen Empfang zwischengespeichert werden, damit das Datenpaket wieder zusammengesetzt werden kann. Ist das Nutzdatenpaket sehr viel kleiner als der Nutzdatenanteil eines Übertragungsdatenpakets, hat man die Wahl entweder Bandbreite nicht auszunutzen, indem man weniger Nutzdaten überträgt als möglich, oder Daten zu verzögern, indem man mehrere Nutzdatenpakete sammelt und sie gemeinsam in einem Übertragungsdatenpaket übermittelt.

Die erlaubte Umlaufzeit bestimmt, in welcher Zeit eine gesendete Nachricht durch eine Antwort bestätigt werden muss. Wird diese Zeit überschritten, wird unterstellt, dass die Nachricht nicht erfolgreich gesendet wurde. Dies kann zu verschiedenen, unerwünschten Reaktionen führen, falls die Nachricht nicht verloren ging, sondern lediglich die Antwortzeit über der erlaubten Umlaufzeit liegt. Eine übliche Reaktion ist die erneute Übertragung der Nachricht, um eine vermuteten Verlust der Nachricht auszugleichen. Eine weitere mögliche Reaktion ist das Auswählen eines anderen Kommunikationspfads, um einer vermuteten Überlast einer Netz- oder Serverkomponente zu entgehen.

Im Folgenden wird die Erfindung anhand von Figuren und Beispielen beschrieben.

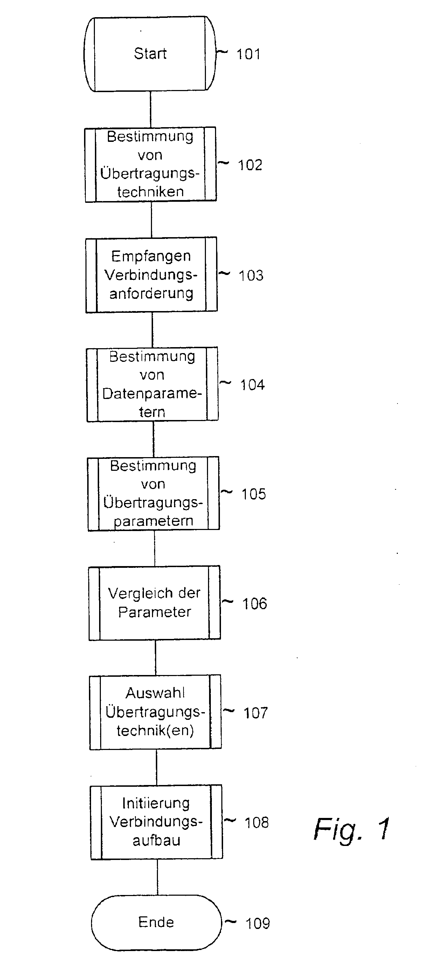

Figur 1 zeigt ein Flussdiagramm eines erfindungsgemäßen Verfahrens. Das Verfahren wird in einem ersten Schritt 101 gestartet. In einem weiteren Schritt 102 werden die zur Verfügung stehenden Übertragungstechniken bestimmt. Diese Bestimmung kann sowohl von einem Endgerät durchgeführt werden, als auch von einer Netzeinrichtung. In einem weiteren Schritt 103 wird eine Verbindungsanforderung empfangen. In einem drauf folgenden Schritt 104 werden die Parameter der zu übertragenden Daten bestimmt. Datenparameter können beispielsweise sein die Menge der zu übertragenden Daten, die Größe von zu übertragenden Datenpaketen, Dienstgüteanforderungen wie eine maximal zulässige Umlaufzeit oder die Taktung des Anfallens einzelner Datenpakete. In einem weiteren Schritt 105 werden Übertragungsparameter bestimmt. Übertragungsparameter beschreiben die Charakteristik der verwendeten Übertragungstechnik. Sie können beispielsweise die Umlaufzeit von Nachrichten umfassen, die Dauer eines Verbindungsaufbaus, die kumulierte Datenmenge, die innerhalb einer vordefinierten Zeit übertragen werden kann, die Größe von Nettodatenblöcken, die übertragen werden können sowie die Taktung von Datenblockübertragungen. In einem weiteren Schritt 106 findet ein gewichteter Vergleich der Datenparameter mit den Übertragungsparametern statt. Die Gewichtung ist durch Vorgaben beeinflussbar, die beispielsweise von dem Teilnehmer, einem Netzbetreiber, einem Operator oder mehreren der Vorgenannten gemacht werden können. In einer bevorzugten Ausführungsform wird die Übertragungstechnik ausgewählt, die am schnellsten, d.h. in der kürzesten Zeit, die zu übertragenden Daten übermittelt. In einem weiteren Schritt 107 wird anhand des Ergebnisses des gewichteten Vergleichs eine Übertragungstechnik ausgewählt. Anschließend wird in einem Schritt 108 der Aufbau einer Verbindung der ausgewählten Übertragungstechnik initiiert. Das Verfahren endet in einem Schritt 109.

In einer Ausführungsform der Erfindung kann der zusätzliche Schritt der Ermittlung der aktuellen Auslastung eines Telekommunikationsnetzes erfolgen. Dieser Schritt kann alternativ in einem Endgerät, einer Netzvorrichtung oder beidem erfolgen. In der Ausführungsform wird die ermittelte Auslastung des Telekommunikationsnetzes bei der Auswahl der Übertragungstechnik berücksichtigt. Alternativ oder zusätzlich kann eine Ermittlung der aktuellen Auslastung einer Übertragungstechnik erfolgen. Wird die Auslastung ermittelt, erfolgt die Auswahl der Übertragungstechnik unter Berücksichtigung der ermittelten Auslastung. Auch diese Ermittlung der aktuellen Auslastung einer Übertragungstechnik kann sowohl netzseitig als auch endgeräteseitig erfolgen.

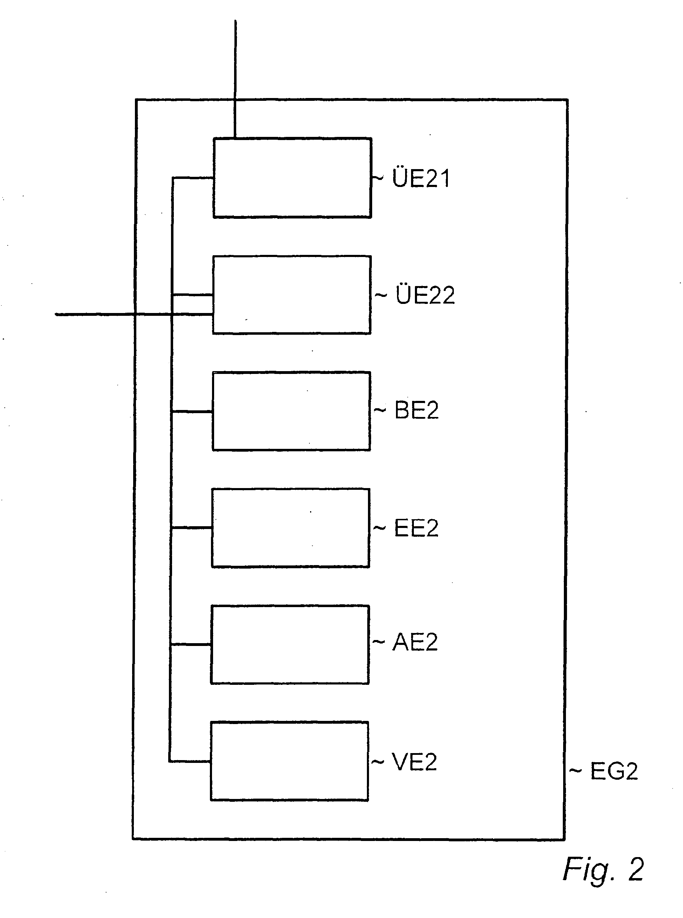

Figur 2 stellt ein erfindungsgemäßes Endgerät EG2 dar. Das erfindungsgemäße Endgerät EG2 umfasst eine Übertragungseinheit ÜE21, ÜE22, die Daten über mindestens zwei verschiedene Übertragungstechniken übermitteln kann. Die Übertragungseinheit wird hier in Form von zwei getrennten Einheiten ÜE21 und ÜE22 dargestellt. Sie kann natürlich auch als eine einzige Einheit implementiert werden. Das Endgerät umfasst weiterhin eine Bestimmungseinheit BE2 zum Bestimmen von Parametern zu übertragender Daten, so genannter Datenparameter. Des Weiteren beinhaltet das Endgerät EG2 eine Ermittlungseinheit EE2 zum Bestimmen von Parametern der Übertragungstechnik. Ebenfalls vorhanden ist eine Auswahleinheit AE2 zum Auswählen mindestens einer Übertragungstechnik. Des Weiteren beinhaltet das Endgerät eine Vergleichseinheit VE2 zum gewichteten Vergleichen der Übertragungsparameter und der Datenparameter. Optional kann ein erfindungsgemäßes Endgerät eine Einheit zur Bestimmung der aktuellen Auslastung eines Telekommunikationsnetzes sowie eine Einheit zur Bestimmung der aktuellen Auslastung einer Übertragungstechnik enthalten. In diesem Fall ist die Auswahleinheit geeignet, die bestimmten Auslastungen in der Auswahl zu berücksichtigen. Die Einheiten können mittels Hardware, mittels Software oder als Kombination aus beiden implementiert werden.

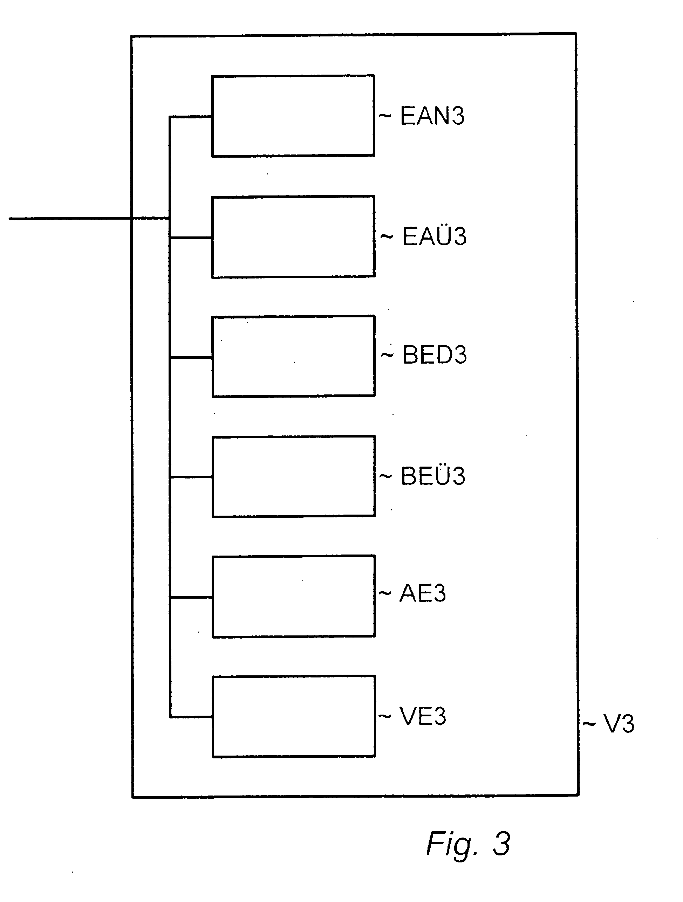

Figur 3 zeigt eine erfindungsgemäße Vorrichtung zur Auswahl einer Übertragungstechnik V3. Die Vorrichtung umfasst eine Einheit zur Bestimmung von Parametern zu übertragender Daten BED3, sowie eine Einheit zur Bestimmung von Übertragungsparametern BEÜ3. Des Weiteren ist eine Auswahleinheit zum auswählen einer Übertragungstechnik AE3 und eine Einheit zum gewichteten Vergleich von Parametern VE3 vorhanden. Ebenfalls dargestellt sind die optionalen Einrichtungen zur Bestimmung der Auslastung eines Telekommunikationsnetzes EAN3 sowie eine Einheit zur Bestimmung der Auslastung einer Übertragungstechnik EAÜ3. Diese Einheiten sind optional. Wenn die Einheiten verwendet werden, ist die Auswahleinheit AE3 derart ausgestaltet, dass sie die Ergebnisse einer oder beider Einheiten bei der Auswahl einer Übertragungstechnik berücksichtigen kann.

## Patentansprüche

1. Verfahren zur Übertragung von Daten zwischen einem Endgerät und einem zellularen Telekommunikationsnetz mit folgenden Schritten:
- Bestimmung von Übertragungstechniken, die sowohl vom Telekommunikationsnetz als auch vom Endgerät unterstützt werden,
- Empfangen einer Verbindungsanforderung von einer Datenapplikation,
- Bestimmen von Parametern der zu übertragenden Daten,
- Bestimmen von Parametern der Übertragungstechniken,
- Gewichteter Vergleich der Parameter,
- Auswahl mindestens einer Übertragungstechnik anhand des Ergebnisses des gewichteten Vergleichs,
- Initiierung eines Verbindungsaufbaus entsprechend der ausgewählten Übertragungstechnik.

2. Verfahren nach Anspruch 1, bei dem die Parameter der zu übertragenden Daten mindestens eines der folgenden umfassen, Datenmenge, Größe von Datenblöcken, Wartezeit bevor ein Datenpaket als verloren gilt und erneut gesendet wird, und erforderliche Antwortzeiten.

3. Verfahren nach Anspruch 1 oder 2, bei dem die Parameter der Übetrragungstechnik mindestens eines der folgenden umfassen, Umlaufzeit, Dauer eines Verbindungsaufbaus, kumulierte Datenmenge die innerhalb einer vordefinierten Zeit übertragen werden kann, Größe von Datenblöcken.

4. Verfahren nach einem der vorhergehenden Ansprüche, bei dem bevorzugt die Übertragungstechnik ausgewählt wird, die am schnellsten die zu übertragenden Daten übermittelt.

5. Verfahren nach einem der vorhergehenden Ansprüche, bei dem bevorzugt die Übertragungstechnik ausgewählt wird, die die beste Ausnutzung von Übertragungsressourcen auf einer Luftschnittstelle bietet.

6. Verfahren nach einem der vorhergehenden Ansprüche, bei dem zusätzlich die aktuelle Auslastung der zur Verfügung stehenden Übertragungstechniken bei der Auswahl berücksichtigt wird.

7. Verfahren nach einem der vorhergehenden Ansprüche, bei dem zusätzlich die aktuelle Auslastung des Telekommunikationsnetzes bei der Auswahl berücksichtigt wird.

8. Verfahren nach einem der vorhergehenden Ansprüche, bei dem einer Applikation ein Anforderungsprofil zugeordnet wird und das Bestimmen der Parameter der zu übertragenden Daten durch eine Identifikation des Anforderungsprofils erfolgt.

9. Verfahren nach einem der vorhergehenden Ansprüche bei dem einer Übertragungstechnik ein Übertragungsprofil zugeordnet wird und das Bestimmen der Parameter der Übertragungstechnik durch eine Identifikation des Übertragungsprofils erfolgt.

10. Verfahren nach einem der vorhergehenden Ansprüche, bei dem die Auswahl anhand vordefinierter Auswahlprogramme erfolgt.

11. Endgerät für ein zellulares Telekommunikationsnetz mit einer Übertragungseinheit die so ausgestaltet ist, dass sie geeignet ist Daten von einer Datenapplikation über mindestens zwei verschiedene Übertragungstechniken zu übermitteln, **gekennzeichnet durch** eine Bestimmungseinheit zum Bestimmen von Parametern zu übertragender Daten, einer Ermittlungseinheit zum Bestimmen von Parametern der Übertragungstechniken, und eine Auswahleinheit zur Auswahl mindestens einer Übertragungstechnik.

12. Endgerät nach einem der vorhergehenden Ansprüche wobei das Endgerät eine Vergleichseinheit zum gewichteten Vergleichen der Parameter enthält, und bei der die Auswahleinheit die Auswahl anhand des Ergebnisses des gewichteten Vergleichs ausführt.

13. Endgerät nach Anspruch 11, mit einer Sendeeinheit zum Senden einer Anfrage zur Auswahl einer Übertragungstechnik an das Telekommunikationsnetz.

14. Endgerät nach Anspruch 11 oder 13, bei dem die Auswahleinheit die Übertragungstechnik unter Berücksichtigung einer von dem Telekommunikationsnetz empfangenen Nachricht auswählt.

15. Endgerät nach Anspruch 14 bei der die Nachricht Informationen über wenigstens eines der folgenden enthält, die aktuelle Auslastung des Telekommunikationsnetzes, die aktuelle Auslastung von mindestens einer Übertragungstechnik, und eine von einer Vorrichtung getroffene Auswahl einer Übertragungstechnik.

16. Vorrichtung zur Auswahl einer Übertragungstechnik für die Übermittlung von Daten zwischen einem Endgerät und einem Telekommunikationsnetz wobei das Telekommunikationsnetz mindestens zwei verschiedene Übertragungstechniken zur Übermittlung von Daten unterstützt, **gekennzeichnet durch** eine Einheit zur Bestimmung von Übertragungstechniken, die sowohl von einem Endgerät als auch vom Telekommunikationsnetz unterstützt werden, einer Einheit zur Bestimmung von Parametern zu übertragender Daten einer Datenapplikation, einer Einheit zur Bestimmung von Parametern einer Übertragungstechnik, einer Einheit zum gewichteten Vergleichen von Parametern, einer Einheit zum Auswählen einer Übertragungstechnik anhand des Ergebnisses des Vergleiches und einer Einheit zum Empfangen einer Anfrage eines Endgerätes sowie zum Senden einer Nachricht mit einer Identifikation der ausgewählten Übertragungstechnik.

17. Vorrichtung nach Anspruch 16, mit einer Einheit zur Ermittlung der aktuellen Auslastung des Telekommunikationsnetzes.

18. Vorrichtung nach Anspruch 16 oder 17, mit einer Einheit zur Ermittlung der aktuellen Auslastung einer Übertragungstechnik.

19. Vorrichtung nach einem der Ansprüche 16 bis 18, mit einer Auswahleinheit die so ausgestaltet ist, dass sie der Auswahl eine aktuelle Auslastung des Telekommunikationsnetzes oder eine aktuelle Auslastung einer Übertragungstechnik oder beides berücksichtigen kann.
